# EUROPEAN PATENT APPLICATION

(11) **EP 3 399 387 A1**
(43) Date of publication of application: **07.11.2018**
(21) Application number: 16881525.6
(22) Date of filing: 24.10.2016
(51) Int. Cl.: G06F 3/00, A63F 13/23, H01R 13/66, H04R 3/00

(54) **CONTROLLER, INPUT/OUTPUT DEVICE, AND COMMUNICATION SYSTEM**

(30) Priority: 28.12.2015 JP 2015256585
(71) Applicant: Sony Corporation, Tokyo 108-0075 (JP)
(72) Inventor: MURATA, Yasunobu, Tokyo 108-0075 (JP); ASADA, Kohei, Tokyo 108-0075 (JP); YOSHII, Kazuma, Tokyo 108-0075 (JP)
(74) Representative: 2SPL Patentanwälte PartG mbB
(86) International application number: PCT/JP2016/081490
(87) International publication number: WO 2017/115545

(57) **Abstract**

To provide a controller, an input and output apparatus, and a communication system capable of performing more various types of input or output between a user and an information processing apparatus while maintaining convenience for the user. A controller includes: a multipolar jack into which a multipolar single-head plug of an input and output apparatus including the multipolar single-head plug is inserted; and a communication unit configured to perform communication with an information processing apparatus. The controller communicates a multiplexed signal via one terminal among a plurality of terminals included in the multipolar jack.

## Description

### Technical Field

The present disclosure relates to a controller, an input and output apparatus, and a communication system.

### Background Art

There have been diffused home-use game consoles which cause game content and the like to be displayed on a video display device such as a display or a television receiver. A game-console controller is used to operate a game console in a state distant from the game console or the video display device (e.g., Patent Literature 1). The game-console controller and the game console perform wireless communication in many cases, and, according to such a configuration, a user can perform operation input to the game console without considering a range of a cable or the like. This is highly convenient.

### Citation List

### Patent Literature

Patent Literature 1: JP H8-24439A

### Disclosure of Invention

### Technical Problem

As a game has been improved and a function of a game console (an example of an information processing apparatus) has been improved, it has been required that various types of input and output can be performed between a user and the game console. In order to achieve more various types of input and output between the user and the game console, it is considered that, for example, an input and output apparatus (a headset or the like) is connected to the game console via a wired or wireless network.

However, in a case where the game console and the input and output apparatus are connected via a wired network, a moving range may be restricted by a length of a wired cable and the like and convenience for the user may be reduced. Further, in a case where the game console and the input and output apparatus are connected via a wireless network, operation for setting connection between the game console and the input and output apparatus and operation for supplying power to the input and output apparatus (e.g., charging management and the like) may be a burden on the user and convenience for the user may be reduced.

In view of this, the present disclosure proposes a controller, an input and output apparatus, and a communication system capable of performing more various types of input or output between a user and an information processing apparatus while maintaining convenience for the user.

### Solution to Problem

According to the present disclosure, there is provided a controller including: a multipolar jack into which a multipolar single-head plug of an input and output apparatus including the multipolar single-head plug is inserted; and a communication unit configured to perform communication with an information processing apparatus. The controller communicates a multiplexed signal via one terminal among a plurality of terminals included in the multipolar jack.

In addition, according to the present disclosure, there is provided an input and output apparatus including: a multipolar single-head plug configured to be inserted into a multipolar jack of a controller including the multipolar jack; and a sensor unit configured to generate a sensor signal by non-acoustic sensing. The input and output apparatus communicates a multiplexed signal via one terminal among a plurality of terminals included in the multipolar single-head plug, and the sensor signal is included in the multiplexed signal and is transmitted to the controller.

In addition, according to the present disclosure, there is provided a communication system including: an input and output apparatus including a multipolar single-head plug, and configured to communicate a multiplexed signal via one terminal among a plurality of terminals included in the multipolar single-head plug; and a controller including a multipolar jack into which the multipolar single-head plug is inserted and a communication unit configured to perform communication with an information processing apparatus, and configured to communicate the multiplexed signal via one terminal among a plurality of terminals included in the multipolar jack.

### Advantageous Effects of Invention

As described above, according to the present disclosure, it is possible to perform more various types of input or output between a user and an information processing apparatus while maintaining convenience for the user.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory view illustrating an overview of a communication system according to a comparison example of a first embodiment of the present disclosure.
[FIG. 2] FIG. 2 is an explanatory view illustrating an overview of a communication system according to this embodiment.
[FIG. 3] FIG. 3 is a block diagram illustrating an example of a logical configuration of the communication system according to this embodiment.
[FIG. 4] FIG. 4 is a flowchart showing an operation example of the communication system according to this embodiment.
[FIG. 5] FIG. 5 is an explanatory view illustrating an overview of a communication system according to a comparison example of a second embodiment of the present disclosure.
[FIG. 6] FIG. 6 is an explanatory view illustrating an overview of a communication system according to this embodiment.
[FIG. 7] FIG. 7 is a block diagram illustrating an example of a logical configuration of the communication system according to this embodiment.
[FIG. 8] FIG. 8 is a flowchart showing an operation example of the communication system according to this embodiment.
[FIG. 9] FIG. 9 is a flowchart showing another operation example of the communication system according to this embodiment.
[FIG. 10] FIG. 10 is an explanatory view illustrating a hardware configuration example.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that, in this description and the drawings, components that have substantially the same functional configuration are sometimes distinguished from each other using different alphabets after the same reference symbol. However, when there is no need in particular to distinguish components that have substantially the same functional configuration, the same reference symbol alone is attached.

Note that description will be provided in the following order.
<<1. First embodiment>>
   <1-1. Overview of first embodiment
   <1-2. Configuration of first embodiment>
   <1-3. Operation of first embodiment>
   <1-4. Effects of first embodiment>
<<2. Second embodiment>>
   <2-1. Overview of second embodiment>
   <2-2. Configuration of second embodiment>
   <2-3. Operation of second embodiment>
   <2-4. Effects of second embodiment>
<<3. Modification examples>>
<<4. Hardware configuration example>>
<<5. Conclusion>>

### «1. First embodiment»

### <1-1. Overview of first embodiment>

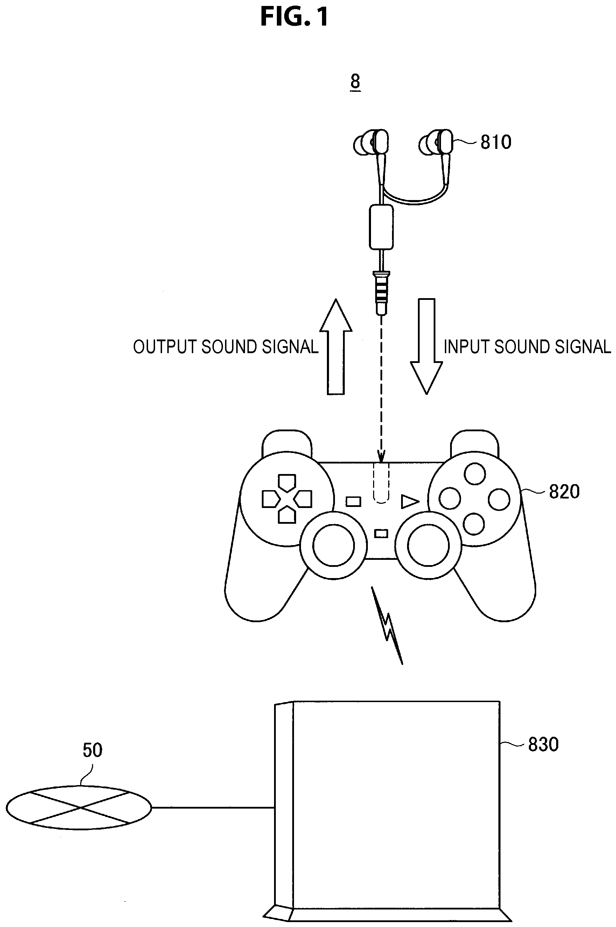

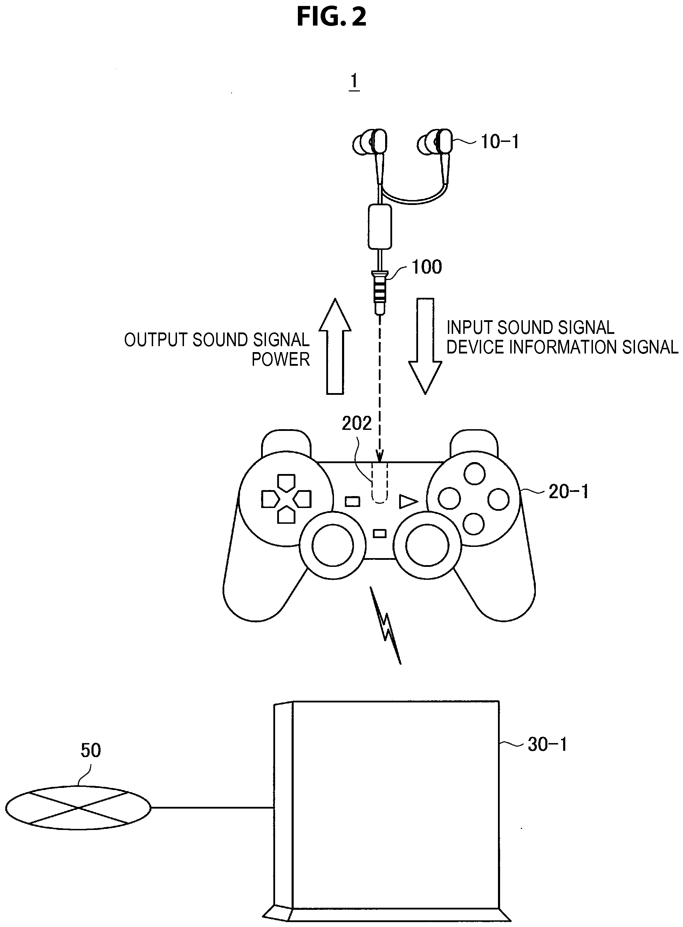

First, a background on which a communication system according to a first embodiment of the present disclosure has been made and an overview of the communication system according to the present embodiment will be described with reference to FIGS. 1 and 2.

### (Background)

In recent years, a game (online game) that is connected to a network to allow another person to share progress of a game has been diffused, and the game is played while a voice chat (a voice call via a network) is being performed with another user. A voice chat is performed by communication via a device dedicated to a voice chat other than a game console in some cases. However, considering a complication concerning introduction of another device, cooperation with a game, and the like, it is desirable to achieve a voice chat via a game console.

In order to achieve a voice chat via a game console, it is considered that, for example, a sound apparatus such as a headset is connected to the game console to achieve input of sound to the game console and output of sound from the game console. However, in a case where the headset is connected to the game console via a wired network, connecting a code (wired cable) to the game console is burdensome to the user, and a moving range is restricted by a length of the code. Further, in a case where the game console and the headset are connected via a wireless network, operation for setting connection between the game console and the headset and operation for supplying power to the headset (e.g., charging management and the like) are a burden on the user.

It is also considered that a voice chat is achieved by connecting, via a wired network, the headset to the game-console controller connected to the game console via a wireless network. Hereinafter, a communication system in which a headset is connected, via a wired network, to a game-console controller connected to a game console via a wireless network to achieve a voice chat will be described with reference to FIG. 1 as a comparison example of the first embodiment of the present disclosure.

FIG. 1 is an explanatory view illustrating an overview of the communication system according to the comparison example of the present embodiment. As illustrated in FIG. 1, a communication system 8 according to the comparison example of the present embodiment includes an input and output apparatus 810, a game-console controller 820, a game console 830, and a communication network 50.

The input and output apparatus 810 is an apparatus that is physically connected to the game-console controller 820 to perform wired communication of signals. For example, the input and output apparatus 810 may be a headset including a driver that is mounted on ears of a user to output sound and a microphone that acquires external sound. The sound acquired by the microphone included in the input and output apparatus 810 is input to the game-console controller 820 from the input and output apparatus 810 as an input sound signal. Further, the input and output apparatus 810 may output sound from the driver included in the input and output apparatus 810 on the basis of an output sound signal output by the game-console controller 820.

The game-console controller 820 is an information processing apparatus that is connected to the game console 830 via a wireless network and allows the user to operate the game console 830. The user performs input using an operation unit including a button, a touchpad, and the like disposed on the game-console controller 820, and an operation signal based on input from the user is transmitted to the game console 830 from the game-console controller 820. Further, the game-console controller 820 transmits an input sound signal input from the input and output apparatus 810 to the game console 830. Further, the game-console controller 820 outputs a sound signal regarding a game received from the game console 830, a sound signal derived from voice of the other party of a voice chat, and the like to the input and output apparatus 810 as output sound signals.

The game console 830 is an information processing apparatus that receives an operation signal from the game-console controller 820 and operates on the basis of the operation signal. The game console 830 is connected to a game server (not shown) and another game console (not shown) via the bidirectional communication network 50 such as the Internet and transmits and receives a program and information of game content regarding a game, a sound signal derived from voice of a voice chat, and the like. Further, the game console 830 has a function of reading and executing a program of game content received from the game server or read from a storage medium.

With the above-mentioned configuration, the communication system 8 can achieve a voice chat via the game console.

However, in a case where, in the above-mentioned communication system 8, information processing including sound processing regarding a sound function of the input and output apparatus 810 is performed by the game console 830, a great delay caused by wireless communication and the like occurs, and therefore it is difficult to achieve a function that is required to perform low-delay processing. For example, a sufficient effect may not be obtained when a great delay occurs in noise cancel processing (hereinafter, also referred to as "NC processing") in which noise derived from environmental sound obtained by the microphone included in the input and output apparatus 810 is reduced from sound to be heard by the user by generating a sound signal having a phase opposite to that of a sound signal derived from the environmental sound and emitting sound based on the signal from the driver included in the input and output apparatus 810.

The present embodiment has been made in view of the above circumstance. The communication system according to the present embodiment can achieve more various functions by communicating a multiplexed signal between a game-console controller and an input and output apparatus. Hereinafter, an overview of the communication system according to the present embodiment for achieving the above-mentioned effect will be described.

### (Overview)

Hereinabove, there has been described the background on which the communication system according to the present embodiment has been made. Next, an overview of the communication system according to the present embodiment will be described with reference to FIG. 2. FIG. 2 is an explanatory view illustrating the overview of the communication system according to the first embodiment of the present disclosure. As illustrated in FIG. 2, a communication system 1 according to the present embodiment includes an input and output apparatus 10-1, a game-console controller 20-1, a game console 30-1, and the communication network 50.

The input and output apparatus 10-1 is an apparatus including a connection unit 100 physically connected to a connection unit 202 of the game-console controller 20-1. The connection unit 100 may be, for example, a multipolar single-head plug to be inserted into the connection unit 202 of the game-console controller 20-1 as illustrated in FIG. 2. Further, the input and output apparatus 10-1 may output a signal to the game-console controller 20-1 or accept input of a signal from the game-console controller 20-1 via the connection unit 100 as illustrated in FIG. 2.

Further, the input and output apparatus 10-1, as well as the input and output apparatus 810 described with reference to FIG. 1, may be a headset including a driver that is mounted on ears of a user to output sound and a microphone that acquires external sound.

As the sound acquired by the microphone included in the input and output apparatus 10-1, an input sound signal is input to the game-console controller 20-1 from the input and output apparatus 10-1. Further, the input and output apparatus 10-1 may output sound from the driver included in the input and output apparatus 10-1 on the basis of an output sound signal input from the game-console controller 20-1.

Further, the input and output apparatus 10-1 according to the present embodiment communicates a multiplexed signal with the game-console controller 20-1. The multiplexed signal may include a plurality of signals, and a clock signal and power may be further superimposed thereon. Note that, hereinafter, transmitting or receiving a multiplexed signal including a predetermined signal in communication between the input and output apparatus 10-1 and the game-console controller 20-1 is also simply expressed as transmitting or receiving the predetermined signal in some cases.

For example, as illustrated in FIG. 2, the input and output apparatus 10-1 according to the present embodiment may transmit a device information signal including device information such as a type of the input and output apparatus 10-1 (e.g., a device ID) and a function (e.g., whether or not NC processing can be performed) to the game-console controller 20-1.

Further, as illustrated in FIG. 2, the input and output apparatus 10-1 according to the present embodiment may operate by receiving power from the game-console controller 20-1. Furthermore, the input and output apparatus 10-1 may have a function of performing predetermined processing that operates with power supplied from the game-console controller 20-1 (e.g., the above-mentioned NC processing function and the like) and perform the processing. Note that the input and output apparatus 10-1 may receive power from the game-console controller 20-1 by, for example, extracting power from a multiplexed signal received from the game-console controller 20-1.

The game-console controller 20-1 is an information processing apparatus that is connected to the game console 30-1 via a wireless or wired network and allows the user to operate the game console 30-1. The user performs input using an operation unit including a button, a touchpad, and the like disposed on the game-console controller 20-1, and an operation signal based on input from the user is transmitted to the game console 30-1 from the game-console controller 20-1. Further, the game-console controller 20-1 may transmit an input sound signal input from the input and output apparatus 10-1 to the game console 30-1 in order to achieve a voice chat. Further, the game-console controller 20-1 may output a sound signal regarding a game received from the game console 30-1, a sound signal derived from voice of the other party of a voice chat, and the like to the input and output apparatus 10-1 as output sound signals.

Further, the game-console controller 20-1 according to the present embodiment is physically connected to the input and output apparatus 10-1 to communicate a multiplexed signal. For example, as illustrated in FIG. 2, the game-console controller 20-1 according to the present embodiment may supply power to the input and output apparatus 10-1 and receive a device information signal from the input and output apparatus 10-1.

The game console 30-1, as well as the game console 830 described with reference to FIG. 1, is an information processing apparatus that receives an operation signal from the game-console controller 20-1 and operates on the basis of the operation signal. The game console 30-1 is connected to a game server (not shown) and another game console (not shown) via the bidirectional communication network 50 such as the Internet and transmits and receives a program and information of game content regarding a game, a sound signal derived from voice of a voice chat, and the like. Further, the game console 30-1 has a function of reading and executing a program of game content received from the game server or read from a storage medium.

The communication network 50 is a wired or wireless transmission path of information transmitted from an apparatus connected to the communication network 50. For example, the communication network 50 may include public networks such as the Internet, a telephone network, and a satellite communication network, various kinds of local area networks (LANs) including Ethernet (registered trademark), wide area networks (WANs), and the like. Further, the communication network 50 may include dedicated networks such as an Internet protocol-virtual private network (IP-VPN).

Hereinabove, the overview of the communication system 1 according to an embodiment of the present disclosure has been described. According to the communication system 1 according to the present embodiment, the input and output apparatus 10-1 operates with power supplied from the game-console controller 20-1, and, for example, the input and output apparatus 10-1 can have a processing function of NC processing and the like and perform the processing. According to such a configuration, it is possible to perform more various types of output to the user, such as output of sound subjected to processing such as NC processing, even in a case where the input and output apparatus 10-1 does not include a battery. Further, the game-console controller 20-1 can perform processing for detecting connection of the input and output apparatus 10-1, processing for specifying a signal to be transmitted to the input and output apparatus 10-1, and the like on the basis of a received device information signal. Hereinafter, a configuration of the present embodiment having such an effect will be described in detail.

### <1-2. Configuration of first embodiment

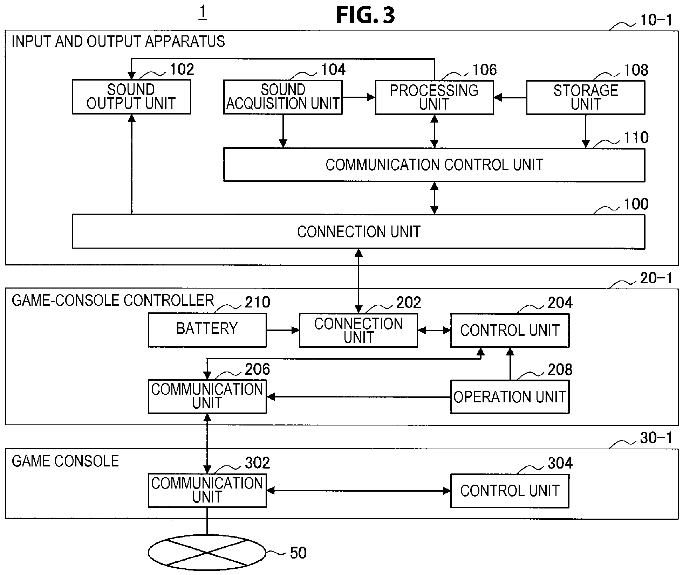

FIG. 3 is a block diagram illustrating an example of a logical configuration of the input and output apparatus 10-1, the game-console controller 20-1, and the game console 30-1 included in the communication system 1 according to the present embodiment.

### (Input and output apparatus)

As illustrated in FIG. 3, the input and output apparatus 10-1 is an information processing apparatus including the connection unit 100, a sound output unit 102, a sound acquisition unit 104, a processing unit 106, a storage unit 108, and a communication control unit 110.

The connection unit 100 is physically connected to the connection unit 202 of the game-console controller 20-1. For example, as illustrated in FIG. 2, the connection unit 100 may be a multipolar single-head plug that is a single plug including a plurality of terminals and to be inserted into the connection unit 202 (multipolar jack) included in the game-console controller 20-1. The multipolar single-head plug specifically corresponds to an earphone plug of 3.5 mm and the like.

The connection unit 100 may output an output sound signal input from the game-console controller 20-1 to the sound output unit 102 and the processing unit 106. Further, the connection unit 100 may output an input sound signal based on sound acquired by the sound acquisition unit 104 to the game-console controller 20-1.

Further, the input and output apparatus 10-1 may communicate a multiplexed signal with the game-console controller 20-1 via the connection unit 100. For example, the input and output apparatus 10-1 may transmit the above-mentioned device information signal to the game-console controller 20-1 via the connection unit 100 and may receive a processing control signal for controlling the processing unit 106 described below from the game-console controller 20-1.

Further, the input and output apparatus 10-1 may receive power from the game-console controller 20-1 via the connection unit 100. According to such a configuration, the input and output apparatus 10-1 can execute various types of processing described below with the power and can therefore achieve various types of output to the user.

As illustrated in, for example, FIG. 2, the connection unit 100 may be a multipolar single-head plug including four terminals. A multiplexed signal may be communicated via one terminal among the four terminals included in the connection unit 100. Although multiplexing processing will be described below, a multiplexed signal can be generated to include a plurality of digital signals. Further, a clock signal and power may be further superimposed on the multiplexed signal.

Further, an output sound signal may be input to the input and output apparatus 10-1 via two other terminals among the four terminals included in the connection unit 100. For example, each of left and right channels Lch and Rch of an output sound signal that is an analog sound signal may be input to the input and output apparatus 10-1 via one terminal. Further, the other terminal of the four terminals included in the connection unit 100 may be used as a ground (GND) terminal.

Note that how to use the terminals included in the connection unit 100 described above is an example and is not limited to the above example. For example, a terminal used for communication of a multiplexed signal is not limited to one terminal, and a multiplexed signal different for each terminal may be communicated. Note that the terminals included in the connection unit 100 are not limited to the above-mentioned four terminals, and the connection unit 100 may include any number of terminals.

The sound output unit 102 is, for example, a driver that outputs sound and outputs sound on the basis of an output sound signal input via the connection unit 100 or a sound signal obtained by the processing unit 106 performing signal processing.

The sound acquisition unit 104 is, for example, a microphone that acquires sound and may output an input sound signal serving as the acquired sound to the connection unit 100 and the processing unit 106. Note that the sound acquisition unit 104 may include a plurality of microphones and may output a plurality of input sound signals.

The processing unit 106 operates with power supplied via the connection unit 100 to perform predetermined processing. According to such a configuration, the input and output apparatus can achieve various types of processing described below and makes it possible to reduce a delay regarding communication, as compared to a case where the processing is performed by the game console.

Further, the processing unit 106 may be controlled by a processing control signal received via the connection unit 100 to perform predetermined processing. For example, the processing unit 106 may perform the predetermined processing by using a parameter included in the processing control signal. Further, the processing control signal may be a signal for switching on/off the processing, and, in such a case, the processing unit 106 may or may not execute the processing in response to the processing control signal. For example, in a case where, in a configuration that has a function of outputting a signal obtained by the processing unit 106 performing predetermined signal processing to the sound output unit 102, the processing is not executed, only an output sound signal may be input to the sound output unit 102.

The predetermined processing performed by the processing unit 106 may include, for example, NC processing in which an influence of noise included in environmental sound is reduced on the basis of an input sound signal input from the sound acquisition unit 104. Hereinafter, an example of NC processing that can be performed by the processing unit 106 will be described.

For example, the processing unit 106 may analyze sound acquired by a microphone provided inside a housing including the sound output unit 102, predict a noise waveform at an eardrum position of the user, and cause a phase of the noise waveform to be inverted (change the phase to an opposite phase), and thus generate a noise reduction signal for canceling noise. Hereinafter, such NC processing will be referred to as "feedback method" in some cases.

Further, the processing unit 106 may perform appropriate filtering processing on noise included in sound acquired by a microphone provided outside the housing including the sound output unit 102 and generate a noise reduction signal for canceling noise. Hereinafter, such NC processing will be referred to as "feedforward method" in some cases.

Further, the processing unit 106 may combine two noise reduction signals obtained by both types of NC processing, i.e., the feedback method and the feedforward method described above and generate a combined noise reduction signal. In such a case, a single microphone (an example of the sound acquisition unit 104) may be provided in both the inside and outside of the single housing including the sound output unit 102.

Further, the processing unit 106 may switch a digital filter used for processing such as phase inversion and filtering described above in accordance with a noise environment. For example, the processing unit 106 may analyze noise included in sound acquired by the microphone and perform the above-mentioned processing by using a digital filter suitable for a noise environment among a plurality of digital filters prepared in advance. The above-mentioned plurality of digital filters prepared in advance may include, for example, digital filters suitable for noise environments of an airplane, a train/bus, and an office. Note that the above-mentioned plurality of digital filters may have, for example, different frequency characteristics.

The NC processing is performed by the processing unit 106 included in the input and output apparatus 10-1 as described above, and therefore a delay caused by communication is reduced, as compared to a configuration in which the NC processing is performed by the game console 30-1.

Further, in a case where the processing unit 106 performs NC processing, the NC processing may be performed on the basis of magnitude of an effect of the NC processing in response to a processing control signal. For example, the magnitude of the effect of the NC processing may be changed by changing the above-mentioned digital filter. For example, a plurality of digital filters suitable for a noise environment may be prepared in advance and the digital filters may be switched in response to a processing control signal, thereby changing the effect of the NC processing. Further, the magnitude of the effect of the NC processing may be changed by changing an output level of a generated noise reduction signal.

Note that predetermined processing performed by the processing unit 106 is not limited to the above-mentioned NC processing. For example, the predetermined processing may include noise reduction processing in which signal processing is performed on an input sound signal or output sound signal. Further, the predetermined processing may include monitoring processing in which sound around the user (environmental sound) is caused to be easily heard on the basis of an input sound signal and the sound output unit 102 is caused to output the sound. Note that, in the monitoring processing, as well as in the above-mentioned NC processing, a digital filter suitable for a noise environment may be used in response to a processing control signal and signal processing may be performed.

Further, the predetermined processing performed by the processing unit 106 may include processing in which a coefficient (HRTF coefficient) of a head related transfer function (HRTF) regarding output of sound using the sound output unit 102 is caused to be changed. Note that the HRTF coefficient may be included in a processing control signal received via the connection unit 100 or may be specified by the processing unit 106 on the basis of information included in the processing control signal or an output sound signal so that a sound image is localized at a predetermined position. Further, the predetermined processing performed by the processing unit 106 may include processing in which the above-mentioned HRTF coefficient is specified so that, even in a case where the user moves his/her head, a localization position of a sound image is fixed to the outside world on the basis of head tracking information of the user obtained by a gyro sensor (not shown) or the like.

The storage unit 108 stores device information such as a program for allowing the processing unit 106 to perform predetermined processing, a type of the input and output apparatus 10-1 (e.g., a device ID), and a function (whether or not noise cancel processing can be performed, or the like). The storage unit 108 is achieved by, for example, a nonvolatile memory such as a flash memory. As a matter of course, a recording medium may be various kinds of configurations such as an HDD, a memory card including a nonvolatile memory, an optical disc, a magneto-optical disc, and a hologram memory, and the storage unit 108 may be a configuration that can execute recording and reproduction in accordance with an employed recording medium.

The communication control unit 110 controls communication of a multiplexed signal with the game-console controller 20-1 via the connection unit 100. For example, the communication control unit 110 may multiplex signals such as a digitized input sound signal and a device information signal, generate a multiplexed signal, and transmit the generated multiplexed signal to the game-console controller 20-1 via the connection unit 100. Further, the communication control unit 110 may extract a signal such as a processing control signal from the multiplexed signal received from the game-console controller 20-1 via the connection unit 100.

### (Game-console controller)

As illustrated in FIG. 3, the game-console controller 20-1 is an apparatus including the connection unit 202, a control unit 204, a communication unit 206, an operation unit 208, and a battery 210.

The connection unit 202 is physically connected to the connection unit 100 of the input and output apparatus 10-1. For example, in a case where the connection unit 100 of the input and output apparatus 10-1 is a multipolar single-head plug as described above, the connection unit 202 may be a multipolar jack including a plurality of terminals and to which the connection unit 100 is inserted.

Further, the connection unit 202 outputs an output sound signal and communicates an input sound signal and a multiplexed signal. For example, the connection unit 202 may output an output sound signal received by a communication unit 226 described below from the game console 30-1 to the input and output apparatus 10-1.

Further, the game-console controller 20-1 may supply power to the input and output apparatus 10-1 via the connection unit 202. According to such a configuration, even in a case where the input and output apparatus 10-1 needs power for operation, the operation is performed without the input and output apparatus 10-1 including a battery or the user performing charging management of the input and output apparatus 10-1.

Further, the above-mentioned device information signal may be received from the input and output apparatus 10-1 via the connection unit 202. According to such a configuration, the game-console controller 20-1 can perform, for example, the processing for detecting connection of the input and output apparatus 10-1, the processing for specifying a signal to be transmitted to the input and output apparatus 10-1, and the like on the basis of the received device information signal.

Further, a processing control signal for controlling the processing unit 106 of the input and output apparatus 10-1 may be transmitted to the input and output apparatus 10-1 via the connection unit 202. The processing control signal may be received by, for example, the communication unit 206 described below from the game console 30-1. According to such a configuration, it is possible to control processing of the processing unit 106 of the input and output apparatus 10-1 on the basis of content of a game, a situation in the game, and the like.

The connection unit 202 may be, for example, a multipolar jack including four terminals. A multiplexed signal may be communicated via one terminal among the four terminals included in the connection unit 202. Further, the game-console controller 20-1 may output an output sound signal (Lch and Rch) that is an analog sound signal via two other terminals among the four terminals included in the connection unit 202 to the input and output apparatus 10-1. Further, the other terminal of the four terminals included in the connection unit 100 may be used as a ground (GND) terminal. Note that the terminals included in the connection unit 202 are not limited to the above-mentioned four terminals, and the connection unit 202 may include any number of terminals. Further, the number of terminals included in the connection unit 202 may correspond to the number of terminals included in the connection unit 100 of the input and output apparatus 10-1.

The control unit 204 controls each unit included in the game-console controller 20-1. For example, the control unit 204 controls communication of a multiplexed signal with the input and output apparatus 10-1 via the connection unit 202. For example, the control unit 204 may multiplex signals such as a processing control signal, generate a multiplexed signal, and transmit the generated multiplexed signal to the input and output apparatus 10-1 via the connection unit 202. Further, the control unit 204 may extract signals such as an input voice signal and a device information signal from the multiplexed signal received from the input and output apparatus 10-1 via the connection unit 202.

Further, the control unit 204 converts a signal obtained by communication with another apparatus between the connection unit 202 and the communication unit 206. By the above-mentioned conversion, for example, a signal received by the communication unit 206 is converted into a signal that can be transmitted via the connection unit 202 and a signal input or received via the connection unit 202 is converted into a signal that can be received by the communication unit 206.

Further, the control unit 204 may perform the processing for detecting connection of the input and output apparatus 10-1, the processing for specifying a signal to be transmitted to the input and output apparatus 10-1, and the like on the basis of the device information signal received via the connection unit 202. For example, the control unit 204 may discriminate processing that can be executed by the processing unit 106 of the input and output apparatus 10-1 connected on the basis of the device information signal and specify a processing control signal for controlling the processing as a signal to be transmitted. Further, information of the discriminated processing that can be executed by the processing unit 106 may be transmitted to the game console 30-1 from the communication unit 206 described below.

The communication unit 206 performs wireless communication with the game console 30-1. The communication unit 206 and the game console 30-1 may be connected by using a wireless communication technology such as Bluetooth (registered trademark), a wireless LAN, or Wi-Fi. The communication unit 206 receives, for example, the above-mentioned processing control signal from the game console 30-1 and outputs the processing control signal to the control unit 204. Further, the communication unit 206 transmits an operation signal based on input from the user to the operation unit 208 described below to the game console 30-1. Further, the communication unit 206 may receive an output sound signal regarding a game from the game console 30-1 and transmit an input sound signal transmitted from the input and output apparatus 10-1 to the game console 30-1.

Note that communication performed by the communication unit 206 is not limited to the above-mentioned wireless communication, and, for example, the game-console controller 20-1 and the game console 30-1 may establish wired connection via a wired cable and perform wired communication. Further, in such a case, the game-console controller 20-1 may receive power from the game console 30-1 to operate, or the battery 210 described below may be charged with power supplied from the game console 30-1.

The operation unit 208 is, for example, a physical button, touchpad, and the like for operating the game console 30-1 and accepts input from the user. Further, the operation unit 208 may generate an operation signal on the basis of input from the user to the operation unit 208 and output the operation signal to the communication unit 206.

The battery 210 supplies power to each unit included in the game-console controller 20-1. Further, the battery 210 supplies power to the input and output apparatus 10-1 via the connection unit 202.

### (Game console)

As illustrated in FIG. 3, the game console 30-1 is an information processing apparatus including a communication unit 302 and a control unit 304. The communication unit 302 is connected to another apparatus to perform wired communication and wireless communication. For example, the communication unit 302 performs wireless communication with the game-console controller 20-1.

For example, the communication unit 302 may receive, from the game-console controller 20-1, the input sound signal, the operation signal, and the signal including information of processing that can be executed by the processing unit 106 of the input and output apparatus 10-1 described above. Further, the communication unit 302 may transmit the processing control signal and the output sound signal described above to the game-console controller 20-1.

Further, the communication unit 302 may be connected to the communication network 50 described with reference to FIG. 2 and perform wired communication or wireless communication with another apparatus connected to the communication network 50 (e.g., home appliances (not shown), a game server, a content server, another game console, and the like). For example, the communication unit 302 may transmit and receive a sound signal to/from another game console in order to perform a voice chat.

The control unit 304 controls each unit included in the game console 30-1 on the basis of an operation signal received by the communication unit 302 from the game-console controller 20-1. Further, the control unit 304 reads and executes a program of game content received by the communication unit 302 from the game server or read from a storage medium (not shown).

Further, the control unit 304 generates a processing control signal in accordance with information of processing that can be executed by the processing unit 106 of the input and output apparatus 10-1 received by the communication unit 302 from the game-console controller 20-1, an input sound signal, a situation in a game, and the like and outputs the processing control signal to the communication unit 302. For example, in a case where the processing unit 106 of the input and output apparatus 10-1 can execute NC processing, the control unit 304 may generate a processing control signal to increase an effect of the NC processing in a situation of loud sound in an environment around the user and a quiet conversation scene in a game.

### <1-3. Operation of first embodiment

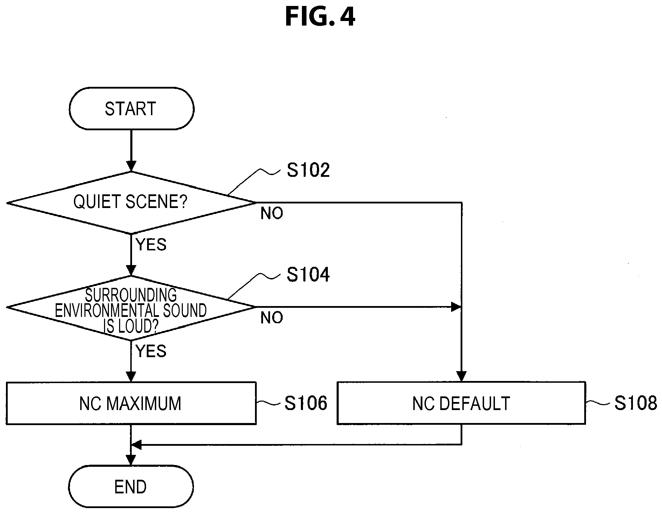

Hereinabove, the configuration example of the communication system 1 according to the first embodiment of the present disclosure has been described. Next, an operation example of the communication system 1 according to the present embodiment will be described with reference to FIG. 4. Note that, hereinafter, an example where predetermined processing performed by the processing unit 106 of the input and output apparatus 10-1 is NC processing will be described.

FIG. 4 is a flowchart showing an operation example of the communication system 1 according to the present embodiment. As illustrated in FIG. 4, first, the control unit 304 of the game console 30-1 determines whether or not a current situation in a game is a quiet scene (S102). For example, the control unit 304 may perform the above-mentioned determination by comparing power or a level of an output sound signal output by the game console 30-1 as game sound with a predetermined threshold. Note that the game console 30-1 may output an output sound signal with power based on a level of sound data recorded in game data in advance.

In a case where it is determined that the current situation in the game is a quiet scene (YES in S102), the control unit 304 determines whether or not surrounding environmental sound is loud (S104). For example, the control unit 304 may perform the above-mentioned determination by comparing power or a level of an input sound signal acquired by the input and output apparatus 10-1 and received via the game-console controller 20-1 with a predetermined threshold. Note that the control unit 304 may remove a component recognized as voice of a user and other components from the input sound signal and extract only power regarding the environmental sound before comparison with the predetermined threshold, and perform the comparison.

In a case where it is determined that the surrounding environmental sound is loud (YES in S104), the control unit 304 generates a processing control signal that maximizes an effect of NC processing, and the processing unit 106 of the input and output apparatus 10-1 executes the NC processing on the basis of the processing control signal (S106).

On the contrary, in a case where it is determined that the current situation in the game is not a quiet scene (NO in S102) or it is determined that the surrounding environmental sound is not loud (NO in S104), the NC processing is performed by using a default parameter set in advance (S108).

The processing in Steps S102 to S108 described above may be performed as necessary or repeatedly and regularly. With such operation, the user can enjoy game sound that has been subjected to more appropriate NC processing.

### <1-4. Effects of first embodiment

Hereinabove, the configuration and operation of the first embodiment of the present disclosure have been described. According to the present embodiment, the input and output apparatus 10-1 can operate with power supplied from the game-console controller 20-1 to perform various types of processing and can perform more various types of output to the user.

### «2. Second embodiment»

### <2-1. Overview of second embodiment>

### (Background)

In the above-mentioned first embodiment, an input sound signal for a voice chat and an operation signal based on input from a user are transmitted to the game console. Meanwhile, hereinafter, an example where not only the above-mentioned signals but also a sensor signal serving as a sensing result acquired by a sensor is transmitted to the game console will be described as a second embodiment.

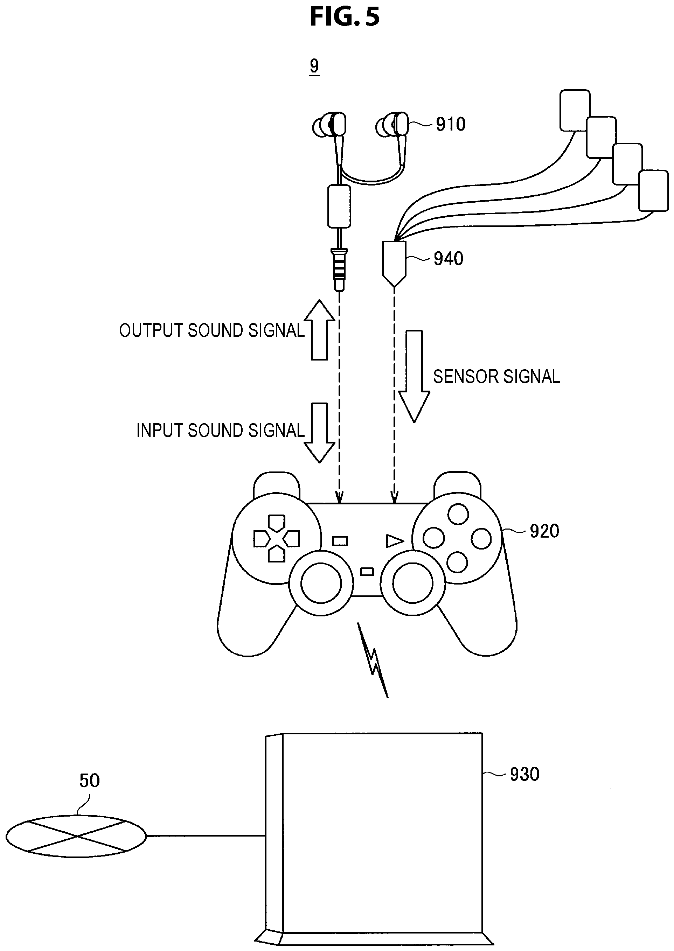

In order to transmit a sensor signal to the game console, it is considered that, for example, a sensor apparatus having a sensing function is connected to the game-console controller. Hereinafter, an example where the sensor apparatus is connected to the game-console controller will be described as a comparison example of the second embodiment of the present disclosure with reference to FIG. 5. FIG. 5 is an explanatory view illustrating an overview of a communication system according to the comparison example of the present embodiment.

As illustrated in FIG. 5, a communication system 9 according to the comparison example of the present embodiment includes an input and output apparatus 910, a game-console controller 920, a game console 930, a sensor apparatus 940, and the communication network 50. Among the above-mentioned configurations, configurations of the input and output apparatus 910 and the communication network 50 are substantially similar to the configurations of the input and output apparatus 810 and the communication network 50 described with reference to FIG. 1, and therefore description thereof is omitted.

A sensor signal serving as a sensing result acquired by the sensor apparatus 940 is input to the game console 930 via the game-console controller 920. The game-console controller 920 includes not only the configuration of the game-console controller 820 described with reference to FIG. 1 but also a connector (connection unit), a peripheral circuit, a control circuit, and the like which are connected to the sensor apparatus 940 described below to control the sensor apparatus 940. However, it is not preferable that the configuration of the game-console controller be complicated.

The present embodiment has been made in view of the above circumstance. A communication system according to the present embodiment can input a sensor signal to a game console without a game-console controller including an additional configuration because an input and output apparatus includes a sensor unit having a sensor function. Hereinafter, an overview of the communication system according to the present embodiment which achieves the above-mentioned effect will be described.

### (Overview)

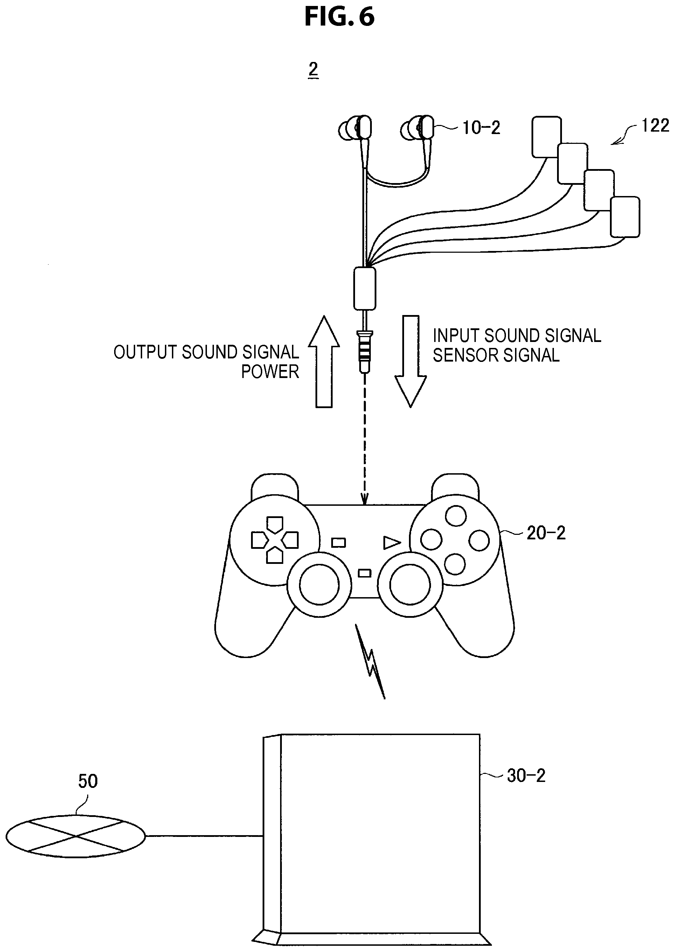

Hereinabove, there has been described the background on which the communication system according to the present embodiment has been made. Next, an overview of the communication system according to the present embodiment will be described with reference to FIG. 6. Note that the second embodiment described below partially has a similar configuration to the configuration of the above-mentioned first embodiment, and therefore description will be provided while the similar configuration is being omitted as appropriate.

FIG. 6 is an explanatory view illustrating an overview of the communication system according to the second embodiment of the present disclosure. As illustrated in FIG. 6, a communication system 2 according to the present embodiment includes an input and output apparatus 10-2, a game-console controller 20-2, a game console 30-2, and the communication network 50.

The input and output apparatus 10-2 according to the present embodiment includes not only the configuration of the input and output apparatus 10-1 described with reference to FIG. 2 but also a sensor unit 122 as illustrated in FIG. 6. Further, the input and output apparatus 10-2 according to the present embodiment may further include an output unit (not shown) and present information (e.g., air sending, smell, and the like) other than sound to the user. A function of the output unit included in the input and output apparatus 10-2 will be described below.

The input and output apparatus 10-2 according to the present embodiment, as well as the input and output apparatus 10-1 described with reference to FIG. 2, communicates a multiplexed signal with the game-console controller 20-2 and accepts input of an output sound signal from the game-console controller 20-2. For example, the input and output apparatus 10-2 according to the present embodiment receives power from the game-console controller 20-2 and transmits a multiplexed signal including a sensor signal to the game-console controller 20-2.

The game-console controller 20-2 illustrated in FIG. 6, as well as the game-console controller 20-1 described with reference to FIG. 2, is an information processing apparatus that is connected to the game console 30-2 via a wireless network and allows the user to operate the game console 30-2. Further, the game-console controller 20-2 has not only the function of the game-console controller 20-1 described with reference to FIG. 2 but also a function of transmitting a sensor signal received from the input and output apparatus 10-2 to the game console 30-2.

The game console 30-2 illustrated in FIG. 6, as well as the game console 30-1 described with reference to FIG. 2, is an information processing apparatus that receives an operation signal from the game-console controller 20-1 and operates on the basis of the operation signal. The game console 30-2 according to the present embodiment has not only the function of the game console 30-1 described with reference to FIG. 2 but also a function of analyzing a state of the user and the like on the basis of a sensor signal received from the game-console controller 20-2. Further, the game console 30-2 according to the present embodiment may control progress of a game and generate a processing control signal for controlling processing of a processing unit (not shown) included in the input and output apparatus 10-2 on the basis of a result of the analysis.

Hereinabove, the overview of the communication system 2 according to the second embodiment of the present disclosure has been described. According to the communication system 2 according to the present embodiment, the game-console controller 20-2 can receive a sensor signal without including an additional connector, peripheral circuit, control circuit, or the like. Further, the game console 30-2 can control progress of a game and processing performed by the input and output apparatus 10-2 on the basis of a sensor signal received via the game-console controller 20-2, and therefore it is possible to perform more various types of input and output between the user and the game console. Hereinafter, the configuration of the present embodiment having such an effect will be described in more detail.

### <2-2. Configuration of second embodiment>

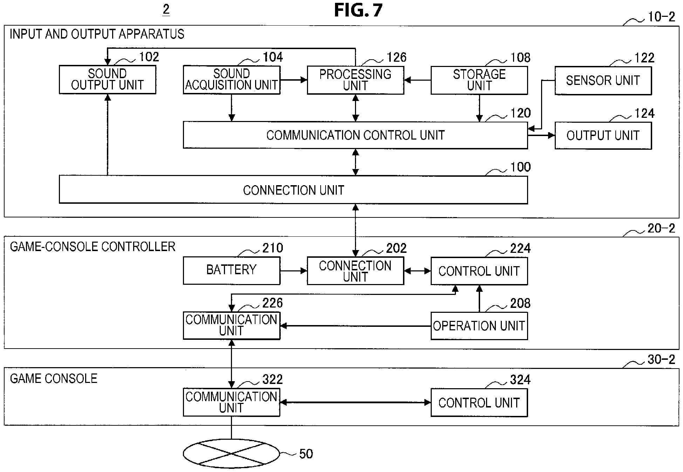

FIG. 7 is a block diagram illustrating an example of a logical configuration of the input and output apparatus 10-2, the game-console controller 20-2, and the game console 30-2 included in the communication system 2 according to the present embodiment.

### (Input and output apparatus)

As illustrated in FIG. 7, the input and output apparatus 10-2 is an information processing apparatus including the connection unit 100, the sound output unit 102, the sound acquisition unit 104, the storage unit 108, a communication control unit 120, the sensor unit 122, an output unit 124, and a processing unit 126. Among the above-mentioned configurations, the configurations of the connection unit 100, the sound output unit 102, the sound acquisition unit 104, and the storage unit 108 have already been described with reference to FIG. 3, and therefore description thereof is herein omitted.

The communication control unit 120, as well as the communication control unit 110 described with reference to FIG. 3, controls communication of a multiplexed signal via the connection unit 100. The communication control unit 120 according to the present embodiment may multiplex not only a digitized input sound signal and a device information signal but also a digitized sensor signal and generate a multiplexed signal. Further, the communication control unit 120 according to the present embodiment may extract not only a processing control signal but also a signal of an output control signal for controlling the output unit 124 described below from a multiplexed signal received from the game-console controller 20-1 via the connection unit 100.

The sensor unit 122 generates a sensor signal serving as a sensing result by non-acoustic sensing. Further, the sensor unit 122 may output the sensor signal to the communication control unit 120. The sensor unit 122 may include a plurality of sensors. Further, the sensor signal according to the present embodiment may include, for example, user information regarding the user of the game-console controller 20-2. The user information may include, for example, biological information such as a brain wave, a heart rate, a body temperature, perspiration, a blood pressure, a pulse, respiration, nictation, and eye movement of the user acquired by a biosensor (an example of the sensor unit 122) attached to the user. Further, the user information may include gaze information such as a line of sight, a focusing position, and the like of the user acquired by an eye-tracking sensor (an example of the sensor unit 122). Further, the user information may include posture information of each part of the user acquired by an inertial sensor (an example of the sensor unit 122) attached to each part of the user.

The above-mentioned user information is useful for analyzing a state of the user such as emotion and a mental state, and, for example, the game console 30-2 can control progress of a game in accordance with the state of the user so as to, for example, entertain the user more.

Note that the sensor unit 122 may be attached to the user to acquire user information. For example, a brain wave, a pulse, eye movement, and the like of the above-mentioned user information are information that can be easily acquired by attaching the sensor unit 122 to the user (in the vicinity of a head, a neck, or eyes of the user in particular). Therefore, it is considered that a configuration in which the input and output apparatus 10-2 attached in the vicinity of the head of the user as in the present embodiment includes the sensor unit 122 is reasonable.

Further, the sensor signal according to the present embodiment is not limited to the above-mentioned sensor signal and may include, for example, environment information regarding an environment around the user. The environment information may include, for example, illuminance information indicating brightness of the environment, temperature information indicating a temperature of the environment, others information including presence/absence of another person, the number of other people existing in the environment, and the like, and other pieces of information. The environment information is also useful for analyzing a state of the user, and a result of the analysis allows progress of a game to be controlled so that, for example, the user can be immersed more in the game.

Note that FIG. 6 illustrates an example where the sensor unit 122 is included in the input and output apparatus 10-2 so as to be integrated therewith. However, the present disclosure is not limited to such an example, and the sensor unit 122 may be detachably provided in the input and output apparatus 10-2.

Description will be continued with reference to FIG. 7 again. The output unit 124 performs non-acoustic output. For example, the output unit 124 may perform output for presenting information regarding five senses other than hearing, such as output of vibration, output of air sending, and output of a smell. Further, the output unit 124 may perform the above-mentioned output in response to an output control signal received from the game-console controller 20-2 via the connection unit 100. According to such a configuration, the output unit 124 performs output based on progress of a game, and therefore the user can feel a higher presence.

### (Game-console controller)

As illustrated in FIG. 7, the game-console controller 20-2 is an apparatus including the connection unit 202, the operation unit 208, the battery 210, a control unit 224, and the communication unit 226. Among the above-mentioned configurations, the configurations of the connection unit 202, the operation unit 208, and the battery 210 have already been described with reference to FIG. 3, and therefore description thereof is herein omitted.

The control unit 224, as well the control unit 204 described with reference to FIG. 3, controls each unit included in the game-console controller 20-2. The control unit 224 according to the present embodiment may multiplex not only a processing control signal but also an output control signal for controlling the output unit 124 and generate a multiplexed signal. Further, the control unit 224 according to the present embodiment may extract not only an input voice signal and a device information signal but also the above-mentioned sensor signal from a multiplexed signal received from the input and output apparatus 10-2 via the connection unit 202.

The communication unit 226, as well as the communication unit 206 described with reference to FIG. 3, performs wireless communication or wired communication with the game console 30-2. The communication unit 226 according to the present embodiment may not only have the function of the communication unit 206 described with reference to FIG. 3 but also transmit a sensor signal received from the input and output apparatus 10-2 via the connection unit 202 to the game console 30-2. Further, the communication unit 226 according to the present embodiment may receive an output control signal for controlling the output unit 124 of the input and output apparatus 10-2 from the game console 30-2.

### (Game console)

As illustrated in FIG. 7, the game console 30-2 is an information processing apparatus including a communication unit 322 and a control unit 324. The communication unit 322, as well as the communication unit 302 described with reference to FIG. 3, is connected to another apparatus to perform wired communication and wireless communication. For example, the communication unit 322 may perform wireless communication with the game-console controller 20-2 and may be connected to the communication network 50 to perform wired communication or wireless communication with another apparatus (not shown) connected to the communication network 50.

The communication unit 322 according to the present embodiment may have not only the function of the communication unit 302 described with reference to FIG. 3 but also a function of receiving a sensor signal from the game-console controller 20-2. Further, the communication unit 322 according to the present embodiment may transmit an output control signal for controlling output of the output unit 124 of the input and output apparatus 10-2 to the game-console controller 20-2.

The control unit 324, as well as the control unit 304 described with reference to FIG. 3, controls each unit included in the game console 30-2 on the basis of an operation signal received by the communication unit 322 from the game-console controller 20-2.

Further, the control unit 324 may not only have the function of the control unit 304 described with reference to FIG. 3 but also control progress of a game and generate a processing control signal on the basis of a sensor signal received by the communication unit 322.

For example, the control unit 324 may analyze user information such as a brain wave and a heart rate included in the sensor signal and determine magnitude of tension of the user. Further, the control unit 324 controls progress of a game in which, for example, an enemy (enemy character) is caused to appear in the game in accordance with the tension of the user and can therefore provide a presentation to surprise and entertain the user more. Further, in a case where the tension of the user is low or the tension of the user is high, the control unit 324 may generate a processing control signal for allowing the processing unit 126 of the input and output apparatus 10-2 to change HRTF so that voice can be heard in the user's ear and output the processing control signal to the communication unit 322. According to such a configuration, it is possible to perform sound output based on a state of the user. For example, in a case where the tension of the user is high, it is considered that the user is on his/her guard, and, in a case where the tension of the user is low, it is considered that the user is off his/her guard. Such a configuration makes it possible to increase a fear to be given to the user in a horror game or the like.

Further, the control unit 324 may analyze environment information included in the sensor signal and perform control based on an environment around the user. For example, in a case where the control unit 324 determines that a temperature around the user is higher than a predetermined threshold on the basis of temperature information included in the sensor signal, the control unit 324 may change weather in the game to sunny weather or may provide a presentation such as generation of flame in the game. Such a configuration can allow the user to be immersed more in the game.

Further, the control unit 324 may generate an output control signal for controlling output of the output unit 124 of the input and output apparatus 10-2 and output the output control signal to the communication unit 322. For example, the control unit 324 may generate an output control signal on the basis of an analysis result of information included in the above-mentioned sensor signal and progress in the game. For example, in a case where the tension of the user is low, the control unit 324 may generate an output control signal for causing air to be sent. Further, in a meal scene in the game, the control unit 324 may generate an output control signal for causing a smell of food to be output. Such a configuration can allow the user to be immersed more in the game.

### <2-3. Operation of second embodiment>

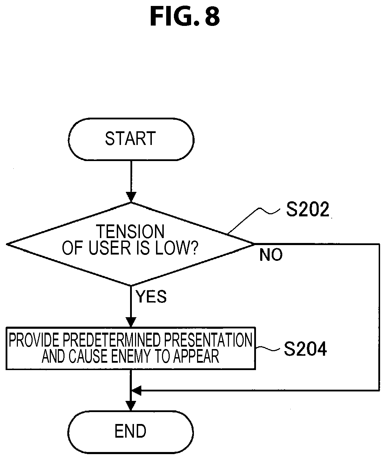

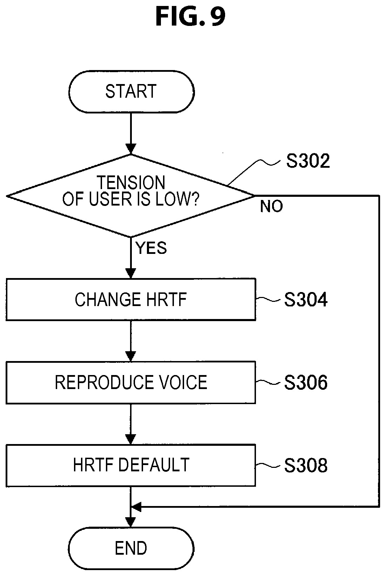

Hereinabove, the configuration example of the communication system 2 according to the second embodiment of the present disclosure has been described. Next, an example where the game console 30-2 controls progress of a game on the basis of a sensor signal (FIG. 8) and an example where the game console 30-2 controls processing of the input and output apparatus 10-2 on the basis of a sensor signal (FIG. 9) will be described with reference to FIGS. 8 and 9 as operation examples of the communication system 2 according to the present embodiment.

FIG. 8 is a flowchart showing an operation example where, in the communication system 2 according to the present embodiment, the game console 30-2 controls progress of a game on the basis of a sensor signal. As shown in FIG. 8, first, the control unit 324 of the game console 30-2 determines whether or not tension of a user is low on the basis of a sensor signal (S202).

In a case where it is determined that the tension of the user is low (YES in S202), the control unit 324 provides a presentation determined in a program of the game and causes an enemy (enemy character) to appear (S204). On the contrary, in a case where it is not determined that the tension of the user is low (NO in S202), the processing is terminated. The processing in Steps S202 to S204 described above may be performed as necessary or repeatedly and regularly.

FIG. 9 is a flowchart showing an operation example where, in the communication system 2 according to the present embodiment, the game console 30-2 controls processing of the input and output apparatus 10-2 on the basis of a sensor signal. As shown in FIG. 9, first, the control unit 324 of the game console 30-2 determines whether or not tension of a user is low on the basis of a sensor signal (S302).

In a case where it is determined that the tension of the user is low (YES in S302), the control unit 324 generates a processing control signal for changing HRTF so that voice can be heard in the user's ear, and the processing unit 126 of the input and output apparatus 10-2 changes HRTF in response to the processing control signal (S304). Then, voice is reproduced from the sound output unit 102 of the input and output apparatus 10-2 (S306). In Step S306, the user hears the voice so that the voice is whispered in the user's ear and can therefore feel more fear and more real. Then, the control unit 324 generates a processing control signal for changing (returning) the HRTF to a default state set in advance, and the processing unit 126 of the input and output apparatus 10-2 changes the HRTF in response to the processing control signal (S308).

On the contrary, in a case where it is not determined that the tension of the user is low (NO in S302), the processing is terminated. The processing in Steps S302 to S308 described above may be performed as necessary or repeatedly and regularly.

### <2-4. Effects of second embodiment>

Hereinabove, the configuration and operation of the second embodiment of the present disclosure have been described. According to the present embodiment, the game-console controller 20-2 can receive a sensor signal and output the sensor signal to the game console 30-2 without including an additional connector, peripheral circuit, control circuit, or the like. Further, the game console 30-2 can control progress of a game and processing performed by the input and output apparatus 10-2 on the basis of the sensor signal received via the game-console controller 20-2, and therefore it is possible to perform more various types of input and output between the user and the game console. Further, the game console 30-2 can control the output unit 124 included in the input and output apparatus 10-2 and perform more various types of output to the user.

### «3. Modification examples»

Hereinabove, the first embodiment and the second embodiment of the present disclosure have been described. Hereinafter, modification examples of each of the above-mentioned embodiments will be described. Note that the modification examples described below may be applied instead of the configuration described in each embodiment and may be additionally applied to the configuration described in each embodiment.

### (Modification example 1)

In the above-mentioned embodiments, there has been described the example where the input and output apparatus has a signal processing function of NC processing, noise reduction processing, monitoring processing, and the like. However, the present technology is not limited to such an example. For example, the game-console controller or game console may have the above-mentioned signal processing function. Further, in such a case, the apparatus having the signal processing function may receive a multiplexed signal including a sound signal derived from sound acquired by the sound acquisition unit included in the input and output apparatus and perform signal processing on the basis of the sound signal.

For example, the communication control unit of the input and output apparatus may multiplex a plurality of input sound signals output from a plurality of microphones included in the sound acquisition unit, generate a multiplexed signal, and transmit the multiplexed signal to the game-console controller. The game-console controller that has received the multiplexed signal may acquire the plurality of input sound signals from the multiplexed signal and perform, for example, the NC processing described in the first embodiment on the basis of the plurality of input sound signals.

For example, the input and output apparatus may transmit, to the game-console controller, a multiplexed signal generated by multiplexing a first input sound signal output from the microphone provided inside the housing and a second input sound signal output from the microphone provided outside the housing. Further, as described in the first embodiment, the game-console controller may perform the NC processing of the feedback method on the basis of the first input sound signal and the NC processing of the feedforward method on the basis of the second input sound signal and generate two noise reduction signals. Furthermore, the game-console controller may combine the two noise reduction signals obtained by both the NC processing of the feedback method and the NC processing of the feedforward method described above and generate a combined noise reduction signal.

Note that, in the above-mentioned description, there has been described the example where the game-console controller performs NC processing based on a plurality of sound signals. However, a multiplexed signal may be transmitted to the game console from the game-console controller, and the game console may perform the above-mentioned NC processing.

### (Modification example 2)

In the above-mentioned embodiments, the example where the game console controls the input and output apparatus has been described. However, the game console may control another device on the basis of information input from the input and output apparatus. For example, the game console may control home appliances connected to a network such as the communication network 50 illustrated in FIG. 2.

For example, the game console may control an apparatus connected to the game console via a network on the basis of information included in a sensor signal to cause sound and the like to be output. For example, in a case where it is determined that the tension of the user is low or high on the basis of a sensor signal, the game console may turn off NC processing of the input and output apparatus and cause a microwave oven connected via the network to output sound to surprise the user. According to such a configuration, it is possible to achieve more various types of output to the user.

Further, for example, in a case where a lock device that is attached to a movable structure such as a door at an entrance of a house and controls locking and unlocking is connected to the communication network 50, the game console may control the lock device on the basis of information input from the input and output apparatus.

For example, the lock device controls a lock unit for locking and unlocking such as a thumb turn of a lock, for example. Further, the lock device can include a movable interface that can be joined with and removed from a movable portion included in the lock unit. For example, this movable interface may be joined with outside of the movable portion of the lock unit, may be joined with the movable portion to be adjacent thereto, or may be joined therewith to cover the movable portion.

Further, the lock device may be attached to the above-mentioned movable structure or may be disposed in another form in which the lock device can operate together with the movable structure. Note that this movable structure is not limited to a door at an entrance and may be, for example, a (sliding or rotating) door of a closet or another type of door in a room, a drawer, a box, a cabinet, a window, or the like.

For example, the game console may detect connection of the input and output apparatus to the game-console controller on the basis of device information input from the input and output apparatus and control the lock unit so that the lock unit is locked immediately or when predetermined time elapses. According to such a configuration, the user can concentrate more on a game.

Further, the game console may detect a ringing (e.g., sound of a chime, a bell, or the like) of an intercom on the basis of a sound signal input from the input and output apparatus and cause a pop-up for allowing the user to select whether to permit unlocking to be displayed on a game screen. According to such a configuration, the user can smoothly continue playing the game even in a case where someone visits.

As a matter of course, control of the lock device by the game console is not limited to the above-mentioned example, and, for example, the game console may control the lock device in accordance with progress of a game, the tension of the user, or the like.

### (Modification example 3)

Further, in the above-mentioned second embodiment, there have been described the example where the game console 30-2 controls progress of a game on the basis of a sensor signal and the example where the game console 30-2 controls processing of the input and output apparatus 10-2 on the basis of a sensor signal. However, operation performed by the game console on the basis of a sensor signal is not limited to the above-mentioned examples.

For example, the game console may cause an enemy to appear from an area other than an area on which the user currently focuses on the basis of focusing information included in a sensor signal. Further, the obtained information included in the sensor signal may be collected as big data to a server or the like connected to the communication network 50 and be used to analyze a tendency for a state of the user (e.g., where on a screen the user tends to see in a certain scene of the game, or the like). Further, an initial disposition, an appearance timing, and the like of the enemy may be set on the basis of the analysis result.

Further, in a case where the game-console controller and the input and output apparatus each include an acceleration sensor and a gyro sensor, the game console may control a point of sight in the game and a posture of the user on the basis of a sensor signal of each sensor. For example, the point of sight in the game may be controlled on the basis of a sensor signal from the input and output apparatus mounted on the head of the user, and a posture of a hand of a player character in the game may be controlled on the basis of a sensor signal from the game-console controller that the user holds in his/her hand. Such a configuration can cause the user to feel a higher presence. Note that the above-mentioned processing is particularly useful in, for example, a first person site (FPS) game using a head mounted display (HMD).

### (Modification example 4)

Further, in the above-mentioned embodiments, there has been described the example where the input and output apparatus having a sound input and output function includes the connection unit (multipolar single-head plug) that enables communication of a multiplexed signal with the game-console controller. However, the present technology is not limited to the above-mentioned example. For example, headphones (output apparatus) that do not have a sound input function but have a sound output function may include the above-mentioned connection unit, and the above-mentioned multiplex communication may be performed between the headphones and the game-console controller. Further, a peripheral (input device) that does not have the sound input and output functions but has a sensor function may include the above-mentioned connection unit, and multiplex communication between the peripheral and the game-console controller and the processing based on a sensor signal described in the second embodiment may be performed. Further, a non-acoustic output apparatus that does not have the sound input and output functions but has a non-acoustic output function may include the above-mentioned connection unit, and multiplex communication between the non-acoustic output apparatus and the game-console controller and the output based on an output control signal described in the second embodiment may be performed. Further, the input and output functions that the input and output apparatus according to the present technology has may be a combination of the above-mentioned functions.

### (Modification example 5)

Further, in the above-mentioned embodiments, there has been described the example where the input and output apparatus includes a multipolar single-head plug and the game-console controller includes a multipolar jack to be connected to the multipolar single-head plug. However, connection between the input and output apparatus and the game-console controller is not limited to the above example. The connection between the input and output apparatus and the game-console controller can be achieved by various configurations as long as the input and output of a signal described above can be performed between the input and output apparatus and the game-console controller. For example, the input and output apparatus and the game-console controller may be connected via a serial bus such as a universal serial bus (USB) or may be connected via a wired LAN.

### «4. Hardware configuration example»

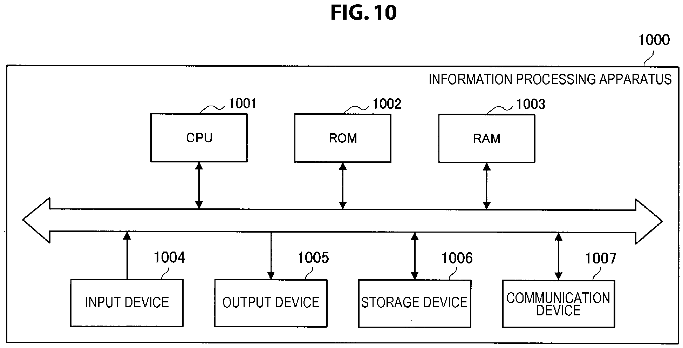

Hereinabove, the embodiments and the modification examples of the present disclosure have been described. Information processing such as the NC processing, the HRTF control processing, and the progress-of-game control processing described above may be achieved by hardware made up of a combination of arithmetic logic units and the like or may be achieved by cooperation between software and hardware of the information processing apparatus described below (the input and output apparatuses 10-1 and 10-2, the game-console controllers 20-1 and 20-2, and the game consoles 30-1 and 30-2). Hereinafter, a hardware configuration of the information processing apparatus according to the present disclosure will be described with reference to FIG. 10. FIG. 10 is a block diagram illustrating an example of the hardware configuration of the information processing apparatus according to the present disclosure. Note that an information processing apparatus 1000 illustrated in the FIG. 10 achieves, for example, the input and output apparatuses 10-1 and 10-2, the game-console controllers 20-1 and 20-2, or the game consoles 30-1 and 30-2 illustrated in FIG. 2, FIG. 3, FIG. 6, and FIG. 7. Information processing performed by the input and output apparatuses 10-1 and 10-2, the game-console controllers 20-1 and 20-2, or the game consoles 30-1 and 30-2 according to the present embodiment is achieved by cooperation between software and hardware described below.

FIG. 10 is an explanatory view illustrating a hardware configuration of the information processing apparatus 1000 according to the present embodiment. As illustrated in FIG. 10, the information processing apparatus 1000 includes a central processing unit (CPU) 1001, a read only memory (ROM) 1002, a random access memory (RAM) 1003, an input device 1004, an output device 1005, a storage device 1006, and a communication device 1007.

The CPU 1001 functions as an arithmetic processing unit and a control apparatus and controls the whole operation in the information processing apparatus 1000 in accordance with various kinds of programs. Further, the CPU 1001 may be a microprocessor. The ROM 1002 stores programs, operation parameters, and the like used by the CPU 1001. The RAM 1003 temporarily stores programs used in execution of the CPU 1001, parameters that appropriately change in execution thereof, and the like. Those units are connected to one another via a host bus made up of a CPU bus or the like. The functions of the processing units 106 and 126, the communication control units 110 and 120, the control units 204 and 224, the control units 304 and 324, and the like are mainly achieved by cooperation between the CPU 1001, the ROM 1002, and the RAM 1003 and software.

The input device 1004 is made up of input means for allowing the user to input information, such as a touchscreen, a button, a microphone, a switch, a lever, a mouse, and a keyboard, an input control circuit that generates an input signal on the basis of input from the user and outputs the input signal to the CPU 1001, and the like. By operating the input device 1004, the user of the information processing apparatus 1000 can input various kinds of data to the information processing apparatus 1000 and instruct the information processing apparatus 1000 to perform processing operation. The input device 1004 corresponds to, for example, the sound acquisition unit 104 and the operation unit 208.

The output device 1005 includes, for example, a display device such as a liquid crystal display (LCD) device, an OLED device, and a lamp. Further, the output device 1005 includes a sound output device such as a speaker and headphones. For example, the display device displays a captured image, a generated image, and the like. Meanwhile, the sound output device converts a sound signal or the like into sound and outputs the sound. The output device 1005 corresponds to, for example, the sound output unit 102 and the output unit 124.

The storage device 1006 is a device for storing data. The storage device 1006 may include a storage medium, a recording device that records data on the storage medium, a reading device that reads data from the storage medium, a deletion device that deletes data recorded on the storage medium, and the like. The storage device 1006 stores programs executed by the CPU 1001 and various kinds of data. The storage device 1006 corresponds to, for example, the storage unit 108.

The communication device 1007 is, for example, a communication interface made up of a communication device to be connected to the communication network 50 and other devices. Further, the communication device 1007 may include a communication device compatible with a wireless local area network (LAN), a communication device compatible with long term evolution (LTE), a wired communication device that performs wired communication, and a Bluetooth (registered trademark) communication device. The communication device 1007 corresponds to, for example, the connection unit 100, the connection unit 202, the communication units 206 and 226, and the communication units 302 and 322.

As above, an example of a hardware configuration has been illustrated that can implements functions of the information processing device 1000 according to the present embodiment. The respective components may be implemented by generic parts or may be implemented by hardware specific to functions of the respective components. Therefore, it is possible to appropriately change hardware configurations to be used in accordance with a technical level at the time when the present embodiments are in use.

Note that a computer program for implementing the respective functions of the above-mentioned information processing device 1000 according to the present embodiment can be created and be mounted in a PC or the like. Further, it is also possible to provide a computer-readable recording medium that stores such a computer program. The recording medium is, for example, a magnetic disc, an optical disc, a magneto-optical disc, a flash memory, or the like. Furthermore, the above-mentioned computer program may be delivered without using a recording medium, for example, via a network.

### «5. Conclusion»

As described above, according to the embodiments of the present disclosure, it is possible to perform more various types of input or output between a user and a game console while maintaining convenience for the user.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, in the above-mentioned embodiments, an example where an apparatus operated by using a controller is a game console has been described. However, the apparatus that can be operated by using the controller according to the present disclosure is not limited to a game console. For example, the controller according to the present disclosure may be a controller for operating not only a game console but also various information processing apparatuses (e.g., a smartphone, a tablet, and the like). Note that the controller according to the present disclosure may be a controller including a physical button for operating the information processing apparatuses. In the above-mentioned embodiments, the operation unit of the game-console controller corresponds to the above-mentioned physical button.

For example, each step according to the above-mentioned embodiments does not always need to be processed in time series in the order described as the flowcharts. For example, each step in the processing according to the above-mentioned embodiments may be processed in order different from that described as the flowcharts, or be processed in parallel.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) A controller including:
   a multipolar jack into which a multipolar single-head plug of an input and output apparatus including the multipolar single-head plug is inserted; and
   a communication unit configured to perform communication with an information processing apparatus, in which
   the controller communicates a multiplexed signal via one terminal among a plurality of terminals included in the multipolar jack.
(2) The controller according to (1), further including
   a physical button for operating the information processing apparatus.
(3) The controller according to (1) or (2), in which
   an analog sound signal is output via another terminal different from the one terminal among the plurality of terminals included in the multipolar jack.
(4) The controller according to any one of (1) to (3), in which
   the communication unit receives a processing control signal for controlling a processing unit included in the input and output apparatus from the information processing apparatus, and
   the processing control signal is included in the multiplexed signal and is transmitted to the input and output apparatus.
(5) The controller according to any one of (1) to (4), in which
   the communication unit receives an output control signal for controlling an output unit included in the input and output apparatus from the information processing apparatus, and
   the output control signal is included in the multiplexed signal and is transmitted to the input and output apparatus.
(6) The controller according to any one of (1) to (5), in which the controller supplies power to the input and output apparatus.
(7) An input and output apparatus including:
   a multipolar single-head plug configured to be inserted into a multipolar jack of a controller including the multipolar jack; and
   a sensor unit configured to generate a sensor signal by non-acoustic sensing, in which
   the input and output apparatus communicates a multiplexed signal via one terminal among a plurality of terminals included in the multipolar single-head plug, and
   the sensor signal is included in the multiplexed signal and is transmitted to the controller.
(8) The input and output apparatus according to (7), further including
   a processing unit configured to perform predetermined processing.
(9) The input and output apparatus according to (8), in which
   the predetermined processing includes processing in which noise derived from environmental sound is reduced from sound to be heard by a user.
(10) The input and output apparatus according to any one of (7) to (9), in which
   the sensor signal includes user information regarding a user of the controller.
(11) The input and output apparatus according to (10), in which
   the user information includes at least any one of biological information, gaze information, and posture information.
(12) The input and output apparatus according to any one of (7) to (11), in which
   the sensor signal includes environment information regarding an environment around the input and output apparatus.
(13) The input and output apparatus according to (12), in which
   the environment information includes at least any one of illuminance information, temperature information, and others information.
(14) The input and output apparatus according to any one of (7) to (13), including
   an output unit configured to perform non-acoustic output, in which
   the output unit is controlled on a basis of an output control signal received from the controller via the one terminal.
(15) The input and output apparatus according to (14), in which
   the output unit performs output of air sending or output of a smell.
(16) A communication system including:
   an input and output apparatus
      including a multipolar single-head plug, and
      configured to communicate a multiplexed signal via one terminal among a plurality of terminals included in the multipolar single-head plug; and
   a controller
      including a multipolar jack into which the multipolar single-head plug is inserted and a communication unit configured to perform communication with an information processing apparatus, and
      configured to communicate the multiplexed signal via one terminal among a plurality of terminals included in the multipolar jack.

### Reference Signs List

- 1, 2: communication system
- 10-1, 10-2: input and output apparatus
- 20-1, 20-2: game-console controller
- 30-1, 30-2: game console
- 50: communication network
- 100: connection unit
- 102: sound output unit
- 104: sound acquisition unit
- 106: processing unit
- 108: storage unit
- 110, 120: communication control unit
- 122: sensor unit
- 124: output unit
- 126: processing unit
- 202: connection unit
- 204: control unit
- 206, 226: communication unit
- 208: operation unit
- 210: battery
- 302,: 322communication unit
- 304,: 324control unit

## Claims

1. A controller comprising:
a multipolar jack into which a multipolar single-head plug of an input and output apparatus including the multipolar single-head plug is inserted; and
a communication unit configured to perform communication with an information processing apparatus, wherein
the controller communicates a multiplexed signal via one terminal among a plurality of terminals included in the multipolar jack.

2. The controller according to claim 1, further comprising
a physical button for operating the information processing apparatus.

3. The controller according to claim 1, wherein
an analog sound signal is output via another terminal different from the one terminal among the plurality of terminals included in the multipolar jack.

4. The controller according to claim 1, wherein
the communication unit receives a processing control signal for controlling a processing unit included in the input and output apparatus from the information processing apparatus, and
the processing control signal is included in the multiplexed signal and is transmitted to the input and output apparatus.

5. The controller according to claim 1, wherein
the communication unit receives an output control signal for controlling an output unit included in the input and output apparatus from the information processing apparatus, and
the output control signal is included in the multiplexed signal and is transmitted to the input and output apparatus.

6. The controller according to claim 1, wherein
the controller supplies power to the input and output apparatus.

7. An input and output apparatus comprising:
a multipolar single-head plug configured to be inserted into a multipolar jack of a controller including the multipolar jack; and
a sensor unit configured to generate a sensor signal by non-acoustic sensing, wherein
the input and output apparatus communicates a multiplexed signal via one terminal among a plurality of terminals included in the multipolar single-head plug, and
the sensor signal is included in the multiplexed signal and is transmitted to the controller.

8. The input and output apparatus according to claim 7, further comprising a processing unit configured to perform predetermined processing.

9. The input and output apparatus according to claim 8, wherein
the predetermined processing includes processing in which noise derived from environmental sound is reduced from sound to be heard by a user.

10. The input and output apparatus according to claim 7, wherein
the sensor signal includes user information regarding a user of the controller.

11. The input and output apparatus according to claim 10, wherein
the user information includes at least any one of biological information, gaze information, and posture information.

12. The input and output apparatus according to claim 7, wherein
the sensor signal includes environment information regarding an environment around the input and output apparatus.

13. The input and output apparatus according to claim 12, wherein
the environment information includes at least any one of illuminance information, temperature information, and others information.

14. The input and output apparatus according to claim 7, comprising
an output unit configured to perform non-acoustic output, wherein
the output unit is controlled on a basis of an output control signal received from the controller via the one terminal.

15. The input and output apparatus according to claim 14, wherein
the output unit performs output of air sending or output of a smell.

16. A communication system comprising:
an input and output apparatus
including a multipolar single-head plug, and
configured to communicate a multiplexed signal via one terminal among a plurality of terminals included in the multipolar single-head plug; and
a controller
including a multipolar jack into which the multipolar single-head plug is inserted and a communication unit configured to perform communication with an information processing apparatus, and
configured to communicate the multiplexed signal via one terminal among a plurality of terminals included in the multipolar jack.
